(19) Europäisches Patentamt / European Patent Office / Office européen des brevets

(11) **EP 2 795 859 B1**

(12) **FASCICULE DE BREVET EUROPEEN**

(45) Date de publication et mention de la délivrance du brevet:
**30.03.2016 Bulletin 2016/13**

(21) Numéro de dépôt: **12806605.7**

(22) Date de dépôt: **30.11.2012**

(51) Int Cl.:
***H04L 25/03*** *(2006.01)*

(86) Numéro de dépôt international:
**PCT/FR2012/052762**

(87) Numéro de publication internationale:
**WO 2013/093274 (27.06.2013 Gazette 2013/26)**

(54) **PROCÉDÉ D'ÉMISSION ET DE RÉCEPTION DE SYMBOLES DE DONNÉES**

VERFAHREN ZUM ÜBERMITTLEN VON DATA-SYMBOLEN

METHOD FOR TRANSMITTING AND RECEIVING DATA SYMBOLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2011 FR 1162441**

(43) Date de publication de la demande:
**29.10.2014 Bulletin 2014/44**

(73) Titulaire: **Orange**
**75015 Paris (FR)**

(72) Inventeur: **PHAN HUY, Dinh Thuy**
**F-75004 Paris (FR)**

(74) Mandataire: **Fontenelle, Sandrine et al**
**Cabinet Beau de Loménie**
**158, rue de l'Université**
**75340 Paris Cedex 07 (FR)**

(56) Documents cités:
**WO-A1-2009/048256      WO-A1-2010/128234**

- **XIANG GAO ET AL: "Linear Pre-Coding Performance in Measured Very-Large MIMO Channels", VEHICULAR TECHNOLOGY CONFERENCE (VTC FALL), 2011 IEEE, IEEE, 5 septembre 2011 (2011-09-05), pages 1-5, XP032029775, DOI: 10.1109/VETECF.2011.6093291 ISBN: 978-1-4244-8328-0**
- **ROBERT C QIU ED - ANONYMOUS: "A Theory of Time-Reversed Impulse Multiple-Input Multiple-Output (MIMO) for Ultra-Wideband (UWB) Communications", ULTRA-WIDEBAND, THE 2006 IEEE 2006 INTERNATIONAL CONFERENCE ON, IEEE, PI, 1 septembre 2006 (2006-09-01), pages 587-592, XP031007200, ISBN: 978-1-4244-0101-7**

**Description**

Arrière-plan de l'invention

L'invention se rapporte au domaine général des télécommunications, et notamment au domaine des communications numériques.

Elle concerne plus particulièrement la transmission (émission et réception) de signaux formés de symboles de données par un système de communications numériques équipé d'antennes multiples en réception, aussi connu sous le nom de système SIMO (Single Input Multiple Output) lorsque le système ne comprend qu'une seule antenne d'émission ou de système MIMO (Multiple Input Multiple Output) lorsque le système est équipé de plusieurs antennes d'émission.

Un tel système MIMO est décrit dans le document WO2009/048256. L'invention s'applique ainsi de façon privilégiée aux communications sans fil, par exemple sur un réseau de quatrième ou de future génération (ex. réseaux LTE, Long Term Evolution) tels que définis dans le standard 3GPP (Third Partnership Project), ou sur des réseaux de transmission optique. Elle peut s'appliquer aussi bien en voie descendante (d'une station de base vers un terminal) qu'en voie montante (d'un terminal vers une station de base).

Par ailleurs, l'invention s'applique de façon privilégiée à un canal de propagation plat en fréquence, c'est-à-dire à un canal sans échos (ou « single tap » en anglais), aussi connu sous le nom de canal « flat fading » en anglais.

De façon connue, les systèmes multi-antennes permettent d'atteindre des débits de transmission très élevés, la capacité des canaux MIMO augmentant proportionnellement avec le nombre minimal d'antennes en émission et d'antennes en réception.

Parmi ces systèmes multi-antennes, les systèmes utilisant un grand nombre d'antennes (ou « large scale multiple antenna networks » en anglais), typiquement de l'ordre d'une ou de plusieurs centaines d'antennes, colocalisées au niveau d'un même site ou distribuées géographiquement, offrent de nombreux avantages tels que notamment des débits plus élevés, une fiabilité accrue de la transmission, des économies d'énergie, etc.

Différentes techniques de transmission de symboles de données ont été proposées pour les systèmes MIMO, dans le cas d'un système mono-porteuse, avec un canal flat fading.

Dans le cas particulier d'un canal « flat fading », le canal de propagation entre une antenne quelconque de l'émetteur et une antenne quelconque du récepteur peut être simplement modélisé par un gain complexe. De ce fait, le canal de propagation entre un émetteur muni de plusieurs antennes d'émission et un récepteur muni de plusieurs antennes de réception s'écrit sous la forme d'une matrice complexe, dite matrice du canal de propagation MIMO, dont chaque ligne correspond à une antenne de réception, et chaque colonne à une antenne d'émission.

Parmi ces techniques, certaines s'appuient sur une connaissance de la matrice du canal de propagation MIMO en émission. Cette connaissance du canal permet de calculer une matrice de focalisation Q (ou matrice de « beamforming »), qui est appliquée sur les symboles de données avant leur émission sur les antennes d'émission. Cette matrice de précodage permet une focalisation de chaque symbole de données sur une antenne de réception particulière afin de faciliter le décodage en réception des symboles de données reçus.

Différentes formes de précodages de focalisation peuvent être envisagées en émission.

Ainsi, par exemple, on peut considérer un précodage de focalisation par retournement temporel. Dans le cas d'un canal « flat fading », le retournement temporel consiste à utiliser comme matrice de focalisation, la transposée conjuguée de la matrice de canal de propagation MIMO.

Dans la suite de la description, on englobe dans la notion de canal de transmission ou de propagation entre des antennes d'émission et des antennes de réception, non seulement les effets du médium sur lequel se propage le signal numérique entre les antennes d'émission et les antennes de réception (ex. canal hertzien ou filaire) mais également les effets induits par les antennes d'émission et de réception sur le signal numérique.

L'implémentation d'une telle matrice de précodage en émission permet d'utiliser en réception un schéma d'égalisation simple sur chaque antenne. En effet, la matrice du canal équivalent résultant du produit de la matrice de précodage et de la matrice du canal de propagation MIMO, est une matrice quasi-diagonale. Par conséquent, aucune inversion matricielle complexe en réception n'est nécessaire pour décoder le signal reçu sur les antennes de réception.

D'autre part, l'obtention de la matrice de précodage ne nécessite pas d'inversion matricielle complexe en émission (transposée conjuguée de la matrice du canal MIMO seulement). Un tel schéma de transmission est donc particulièrement bien adapté pour les systèmes MIMO basés sur des grands réseaux d'antennes.

Toutefois, on peut observer qu'avec ce schéma de transmission, des interférences entre les symboles de données subsistent en réception (ces interférences correspondent aux termes non diagonaux et non nuls de la matrice du canal équivalent), ce qui a un impact en terme de performances. En d'autre termes, avec ce schéma de transmission, chaque symbole est focalisé sur une antenne de réception cible distincte créant une tache focale qui est centrée sur cette antenne cible, mais qui interfère avec les antennes de réceptions voisines.

D'autres systèmes de transmission MIMO ont été proposés pour réduire les interférences entre symboles résiduelles. Ces systèmes sont par exemple basés sur l'utilisation de précodeurs :

- de type forçage à zéro ou ZF pour Zéro Forcing en anglais : ces précodeurs font en sorte d'annuler les termes non diagonaux de la matrice du canal équivalent, et qu'une tache focale centrée sur une antenne de réception cible ait une interférence nulle avec les antennes voisines ; ou
- minimisant l'erreur quadratique moyenne (MMSE pour Minimum Mean Square Error en anglais).

Toutefois, ces systèmes requièrent des opérations matricielles complexes en réception, impliquant notamment des inversions de matrices. Or, d'une part, la faisabilité de telles inversions n'est pas garantie. Et d'autre part, ces inversions de matrices ne sont pas réalisables en pratique pour un grand nombre d'antennes.
Il existe donc un besoin d'un schéma de transmission numérique pouvant être utilisé dans le cadre de réseaux multi-antennes ayant un grand nombre d'antennes et ne présentant pas les inconvénients de l'état de la technique.

Objet et résumé de l'invention

L'invention répond notamment à ce besoin en proposant un procédé d'émission et un procédé de réception de signaux destinés à être mis en oeuvre dans un système comportant M antennes d'émission et N+C antennes de réception, M, N et C étant des paramètres entiers supérieurs ou égaux à 1, pour la transmission de N symboles de données.
Plus précisément, l'invention propose un procédé d'émission de symboles de données par un dispositif émetteur comportant un nombre M d'antennes d'émission, à destination d'un dispositif récepteur comportant un nombre N+C d'antennes de réception, M, N et C étant des paramètres entiers supérieurs ou égaux à 1, ce procédé d'émission comprenant :

- une étape de multiplexage en fréquence spatiale d'un bloc de N symboles de données $D_1, D_2, ..., D_N$ résultant en un bloc de N symboles spatiaux utiles $S_{u,1}, S_{u,2}, .., S_{u,N}$, cette étape utilisant une transformée de Fourier discrète inverse ;
- une étape d'ajout de C symboles spatiaux de redondance au bloc de N symboles spatiaux utiles, résultant en un bloc de N+C symboles spatiaux $S_1, S_2, ..., S_{N+C}$ ; et
- une étape de précodage du bloc de N+C symboles spatiaux $S_1, S_2, ..., S_{N+C}$ à l'aide d'une matrice de focalisation de dimensions Mx(N+C), ladite étape de précodage fournissant M symboles spatiaux précodés $X_1, X_2, ..., X_M$, chaque symbole spatial précodé étant émis sur une antenne d'émission distincte du dispositif émetteur.

L'invention vise également un procédé de réception, par un dispositif récepteur comprenant un nombre N+C d'antennes de réception, de N+C symboles spatiaux $Y_1, Y_2, ..., Y_{N+C}$, ces symboles spatiaux reçus résultant de la propagation via un canal de propagation de M symboles spatiaux $X_1, X_2, ..., X_M$ émis par un dispositif émetteur via un nombre M d'antennes d'émission, ces symboles spatiaux précodés $X_1, X_2, ..., X_M$ étant issus d'un précodage, à l'aide d'une matrice de focalisation, d'un bloc de N+C symboles spatiaux $S_1, S_2, ..., S_{N+C}$, ces symboles spatiaux $S_1, S_2, ..., S_{N+C}$ étant eux-mêmes issus d'un multiplexage en fréquence spatiale de symboles de données $D_1, D_2, ..., D_N$ utilisant une transformée de Fourier discrète inverse et d'un ajout de C symboles spatiaux de redondance, M, N et C étant des paramètres entiers supérieurs ou égaux à 1. Conformément à l'invention, le procédé de réception comprend :

- une étape d'extraction de N symboles spatiaux utiles reçus $S'_{u,1}, S'_{u,2}, ..., S'_{u,N}$ parmi les N+C symboles spatiaux reçus $Y_1, Y_2, ..., Y_{N+C}$ ;
- une étape de démultiplexage en fréquence spatiale des N symboles spatiaux utiles reçus $S'_{u,1}, S'_{u,2}, ..., S'_{u,N}$, résultant en un bloc de N symboles de données démultiplexés $D'_1, D'_2, D'_N$, cette étape utilisant une transformée de Fourier discrète ; et
- une étape d'égalisation du bloc de N symboles de données démultiplexés $D'_1, D'_2, ..., D'_N$.

Ainsi l'invention propose de combiner judicieusement différents traitements à l'émission pour permettre, au niveau du récepteur, de réduire l'effet des interférences créées par une tache focale centrée sur une antenne de réception dite cible (tache qui reflète le niveau du signal destiné à cette antenne cible reçu sur les antennes de réception du dispositif récepteur), sur les antennes voisines. Ces traitements sont notamment un multiplexage en fréquence spatiale de N symboles de données en un bloc de N symboles spatiaux utiles, un ajout de C symboles spatiaux de redondance aux symboles spatiaux utiles et un précodage permettant une focalisation des symboles émis sur les N+C antennes de réception.
Plus précisément, l'invention permet d'exploiter un phénomène de « durcissement » du canal de propagation (aussi connu sous le nom de « channel hardening » en anglais) autour des antennes de réception induit par le schéma de transmission de l'invention, et qui se manifeste notamment par une invariance de certaines statistiques du canal au niveau des antennes de réception. Ce durcissement du canal de propagation se traduit par une tache focale au niveau de chaque antenne de réception sensiblement identique quelle que soit la position de l'antenne de réception.

Cette tache focale pour une antenne de réception cible s'étale sur plusieurs antennes de réception autour de l'antenne de réception cible, et interfère avec ces antennes. Or, l'ajout de C symboles spatiaux de redondance en émission à des symboles spatiaux utiles issus d'un multiplexage en fréquence spatiale de symboles de données conformément à l'invention, combinée à l'utilisation de N+C antennes de réception au niveau du dispositif récepteur, permet avantageusement de réduire l'effet de ces interférences au niveau du récepteur, après extraction des symboles spatiaux utiles reçus.

Autrement dit, l'invention utilise C antennes de réception pour absorber l'interférence, tandis que N antennes de réception sont dédiées à la réception et au décodage des signaux utiles émis par le dispositif émetteur. L'étape d'extraction des N symboles S'$_{u,1}$, S'$_{u,2}$, ..., S'$_{u,N}$ permet de supprimer les interférences.

L'étape d'ajout de C symboles de redondance au cours du procédé d'émission de l'invention peut comprendre notamment :

- l'insertion d'un suffixe de LT symboles spatiaux de redondance à la suite du bloc S$_{u,1}$,S$_{u,2}$,...,S$_{u,N}$ de N symboles spatiaux utiles ; et/ou
- l'insertion d'un préfixe de KT symboles spatiaux de redondance en tête du bloc S$_{u,1}$,S$_{u,2}$,...,S$_{u,N}$ de N symboles spatiaux utiles ;

LT et KT désignant deux paramètres entiers positifs ou nuls tels que C=KT+LT.

Dans un mode de réalisation particulier, KT=C, LT=0 ou KT=0 et LT=C.

En variante, d'autres configurations répartissant les symboles spatiaux de redondance au début et à la fin du bloc S$_{u,1}$,S$_{u,2}$,...,S$_{u,N}$ de symboles spatiaux utiles peuvent bien entendu être également envisagées.

Les symboles spatiaux de redondance ajoutés ne contiennent pas d'information utile à proprement parler. Préférentiellement, on ajoute un préfixe et/ou un suffixe cyclique(s) au bloc de N symboles spatiaux utiles : ainsi, le préfixe ajouté reprend les KT derniers symboles du bloc de N symboles spatiaux utiles S$_{u,1}$,S$_{u,2}$,...,S$_{u,N}$ tandis que le suffixe ajouté reprend les LT premiers symboles du bloc de N symboles spatiaux utiles S$_{u,1}$,S$_{u,2}$,...,S$_{u,N}$.

Par ailleurs, un choix judicieux de la matrice de focalisation utilisée en émission pour le précodage des symboles spatiaux permet d'une part de limiter la complexité du précodage à l'émission, et d'autre part, de limiter la complexité de l'égalisation réalisée en réception.

Ainsi, par exemple, la matrice de focalisation peut être une matrice de retournement temporel obtenue par la transposée conjuguée d'une estimation de la matrice du canal de propagation MIMO entre les M antennes d'émission du dispositif émetteur et les N+C antennes de réception du dispositif récepteur.

L'utilisation d'une telle matrice de précodage, combinée à l'insertion de C symboles de redondance sous la forme d'un préfixe et/ou d'un suffixe cyclique(s), permet avantageusement de transformer le canal, entre les N+C symboles spatiaux S$_1$, S$_2$, ..., S$_{N+C}$ et les N+C symboles spatiaux reçus, en un canal équivalent, entre les N symboles spatiaux utiles S$_{u,1}$,S$_{u,2}$,...,S$_{u,N}$ et les N symboles spatiaux utiles reçus S'$_{u,1}$, S'$_{u,2}$, ..., S'$_{u,N}$, modélisé par une matrice circulante. Une telle matrice est, de façon connue, diagonalisable dans une base de Fourier. Ceci a pour conséquence qu'après démultiplexage des symboles spatiaux utiles reçus S'$_{u,1}$, S'$_{u,2}$, ..., S'$_{u,N}$, un schéma d'égalisation très simple ne requérant pas d'inversion de matrice peut être mis en oeuvre.

D'autres matrices de focalisation peuvent être utilisées pour mettre en oeuvre l'invention.

Ainsi, dans une autre variante, la matrice de focalisation peut être une matrice de type ZF ou MMSE opérant sur un espace restreint à C+1 dimensions. L'égalisation réalisée en réception requiert alors certes une inversion de matrice, toutefois cette matrice est de dimensions très limitées par rapport au nombre total N+C d'antennes de réception, notamment lorsque N est grand.

En conséquence, l'invention permet avantageusement d'utiliser des schémas de réception très simples, y compris lorsqu'un grand nombre d'antennes de réception est envisagé.

Dans un mode particulier de réalisation du procédé de réception de l'invention, dans lequel C=KR+LR, KR et LR étant des paramètres entiers positifs ou nuls, les N symboles spatiaux utiles reçus S'$_{u,1}$, S'$_{u,2}$, ..., S'$_{u,N}$ extraits à l'étape d'extraction vérifient :

$$S'_{u,n} = Y_{n+KR}$$

pour *n* = 1, ..., *N*.

Dans un mode privilégié de réalisation, on choisit les paramètres KR, LR et C de sorte à s'assurer d'une part, que la tache focale au niveau de chaque antenne de réception (dite cible) est concentrée en majeure partie sur l'antenne de réception cible et sur C antennes de réception autour de cette antenne de réception cible (i.e. énergie du signal négligeable sur les autres antennes de réception), et d'autre part, que la tache focale obtenue est invariante quelle que soit la position de l'antenne de réception cible (i.e. de sorte à exploiter le phénomène de « channel hardening » décrit précédemment sur un espace restreint de dimension C défini autour de l'antenne de réception cible (i.e. espace de dimension totale C+1 en incluant l'antenne de réception cible).

Ainsi à cette fin, on choisit les paramètres C, KR et LR de sorte qu'ils vérifient, pour au moins une antenne de réception dite cible, indexée par *n* et sélectionnée parmi les N+C antennes de réception du dispositif récepteur, une condition de focalisation du symbole spatial $S_n$ sur un espace défini par l'antenne de réception cible indexée par *n* et KR+LR antennes de réception réparties autour de l'antenne de réception cible indexée par *n*.

Selon une première variante de cette condition de focalisation, les paramètres C, KR et LR vérifient qu'une probabilité P que :

$$\left\{ \left| \frac{H^{eq}_{n,n+\ell}}{H^{eq}_{n,n}} \right| \leq \varepsilon_{foc}, \text{pour } \ell \text{ entier tel que } \ell > LR \text{ ou } \ell < -KR, 1 \leq \ell + n, \text{et } 0 \leq \varepsilon_{foc} < 1 \right\}$$

soit inférieure à une valeur *Pmin* déterminée, comprise entre 0 et 1, où $H^{eq}$ désigne une matrice de dimensions (N+C)x(N+C) résultant du produit de la matrice de précodage et d'une matrice représentant le canal de propagation entre les M antennes d'émission du dispositif émetteur et les N+C antennes de réception du dispositif récepteur, $H^{eq}_{j,p}$ désignant la composante située à l'intersection de la j-ième ligne et de la p-ième colonne de la matrice $H^{eq}$. On note que la j-ième ligne de la matrice $H^{eq}$ correspond au symbole spatial reçu $Y_j$, et la p-ième colonne de la matrice $H^{eq}$ correspond au symbole spatial $S_p$.

On s'assure ainsi que la tache focale présente un niveau de signal important dans un espace restreint de dimension C+1 autour de l'antenne cible (incluant l'antenne cible), et un niveau de signal négligeable en dehors de cet espace.

Selon une seconde variante de la condition de focalisation, les paramètres C, KR et LR vérifient qu'une probabilité P' que :

$$\left\{ \left| \frac{Z_{n,n+\ell}}{P_{noise}} \right| \leq \varepsilon_{foc}, \text{pour } \ell \text{ entier tel que } \ell > LR \text{ ou } \ell < -KR, 1 \leq \ell + n, \text{et } 0 \leq \varepsilon_{foc} < 1 \right\}$$

soit inférieure à une valeur *P'min* déterminée comprise entre 0 et 1, où :

- $P_{noise}$ désigne une puissance de bruit au niveau de l'antenne de réception cible indexée par *n*;
- $Z_{n,n+\ell}$ désigne la puissance reçue au niveau de l'antenne de réception cible indexée par *n* associée au symbole spatial $S_{n+\ell}$.

Cette seconde variante de la condition de focalisation permet de s'assurer qu'après l'étape d'extraction des N symboles spatiaux utiles des symboles spatiaux reçus, les interférences résiduelles entre symboles demeurent négligeables devant le bruit.

Comme mentionné précédemment, les paramètres C, KR et LR peuvent également être choisis de sorte à vérifier une condition de « channel hardening » autour de l'antenne cible, visant à garantir l'invariance de la tache focale quelle que soit la position de l'antenne cible. Cette invariance rend l'estimation des symboles émis par le dispositif émetteur réalisable, diminuant en effet le nombre d'inconnues à estimer en réception.

A cette fin, selon une variante de réalisation de cette condition de « channel hardening », les paramètres C, KR et LR vérifient qu'il existe une forme de tache focale représentée par un vecteur de dimension C+1, $v=(v_{-LR}, v_{-LR}+1,..., v_{KR})$ de nombres complexes, telle que, quelle que soit l'antenne de réception considérée du dispositif récepteur indexée par *n*, la forme d'une tache focale centrée sur cette antenne de réception et représentée par un vecteur de dimension C+1, $A_n=(A_{n,-LR}, A_{n,-LR+1},...,A_{n,KR})$ de nombres complexes, avec $A_{n,n+\ell} = H^{eq}_{n,n+\ell}$ pour $-LR \leq \ell \leq KR$, $1 \leq n + \ell$, vérifie :

$$d(A_n, v) \leq d_{max}$$

où :

- $d_{max}$ est une valeur prédéterminée,
- $d(A_n, v)$ désigne une distance entre les formes de tache focale $A_n$ et $v$ ; et
- $H^{eq}$ désigne une matrice de dimensions (N+C)x(N+C) résultant du produit de la matrice de précodage et d'une matrice représentant le canal de propagation entre les M antennes d'émission du dispositif émetteur et les N+C antennes de réception du dispositif récepteur, $H^{eq}_{j,p}$ désignant la composante située à l'intersection de la j-ième ligne et de la p-ième colonne de la matrice $H^{eq}$.

On note que les paramètres C, KR et LR peuvent avantageusement vérifier à la fois une condition de focalisation et une condition de channel hardening telles que mentionnées précédemment. Les interférences étant concentrées sur C+1 antennes de réception, on peut alors démontrer, en faisant l'hypothèse d'une estimation parfaite du canal de propagation MIMO entre les antennes, que les interférences entre les antennes de réception sont supprimées après l'extraction des N symboles spatiaux utiles en réception.

Dans un mode particulier de réalisation, les différentes étapes du procédé d'émission et les étapes du procédé de réception sont déterminées par des instructions de programmes d'ordinateurs.

En conséquence, l'invention vise aussi un programme d'ordinateur sur un support d'informations, ce programme étant susceptible d'être mis en oeuvre dans un dispositif émetteur ou plus généralement dans un ordinateur, ce programme comportant des instructions adaptées à la mise en oeuvre des étapes d'un procédé d'émission tel que décrit ci-dessus.

L'invention vise aussi un programme d'ordinateur sur un support d'informations, ce programme étant susceptible d'être mis en oeuvre dans un dispositif récepteur ou plus généralement dans un ordinateur, ce programme comportant des instructions adaptées à la mise en oeuvre des étapes d'un procédé de réception tel que décrit ci-dessus.

Ces programmes peuvent utiliser n'importe quel langage de programmation, et être sous la forme de codes source, codes objet, ou de codes intermédiaires entre codes source et codes objet, tels que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un dispositif émetteur comportant un nombre M d'antennes d'émission, apte à émettre des symboles de données à destination d'un dispositif récepteur comportant un nombre N+C d'antennes de réception, M, N et C étant des entiers supérieurs ou égaux à 1, ce dispositif émetteur comprenant :

- des moyens de multiplexage en fréquence spatiale d'un bloc de N symboles de données $D_1, D_2, ..., D_N$ utilisant une transformée de Fourier discrète inverse, et fournissant un bloc de N symboles spatiaux utiles $S_{u,1}, S_{u,2}, ..., S_{u,N}$ ;
- des moyens d'insertion de C symboles spatiaux de redondance dans le bloc de N symboles spatiaux utiles, fournissant un bloc de N+C symboles spatiaux $S_1, S_2, ..., S_{N+C}$ ;
- des moyens de précodage du bloc de N+C symboles spatiaux $S_1, S_2, ..., S_{N+C}$ fourni par les moyens d'insertion, à l'aide d'une matrice de focalisation de dimensions Mx(N+C), fournissant M symboles spatiaux précodés $X_1, X_2, ..., X_M$ ; et
- des moyens d'émission de manière focalisée de chaque symbole précodé sur une antenne d'émission distincte du dispositif émetteur.

Corrélativement, l'invention vise aussi un dispositif récepteur comportant un nombre N+C d'antennes de réception, apte à recevoir, sur lesdites N+C antennes de réception, N+C symboles spatiaux $Y_1, Y_2, ..., Y_{N+C}$ , lesdits symboles spatiaux reçus résultant de la propagation via un canal de propagation de M symboles spatiaux précodés $X_1, X_2, ..., X_M$ émis par un dispositif émetteur via un nombre M d'antennes d'émission, lesdits symboles spatiaux précodés $X_1, X_2, ..., X_M$ étant issus d'un précodage, à l'aide d'une matrice de focalisation, d'un bloc de N+C symboles spatiaux $S_1, S_2, ..., S_{N+C}$, ces symboles spatiaux étant issus d'un multiplexage en fréquence spatiale de symboles de données $D_1, D_2, ..., D_N$ utilisant une transformée de Fourier discrète inverse et d'un ajout de C symboles spatiaux de redondance, M, N et C étant des entiers supérieurs ou égaux à 1, ledit dispositif récepteur comprenant :

- des moyens d'extraction de N symboles spatiaux utiles reçus notés S'$_{u,1}$, S'$_{u,2}$, ..., S'$_{u,N}$ parmi lesdits N+C symboles spatiaux reçus Y$_1$, Y$_2$, ..., Y$_{N+C}$ ;
- des moyens de démultiplexage en fréquence spatiale des N symboles spatiaux utiles reçus S'$_{u,1}$, S'$_{u,2}$, ..., S'$_{u,N}$ utilisant une transformée de Fourier discrète, en un bloc de N symboles de données démultiplexés D'$_1$, D'$_2$, ..., D'$_N$ ; et
- des moyens d'égalisation du bloc de N symboles de données démultiplexés D'$_1$, D'$_2$, ..., D'$_N$.

Dans un mode particulier de réalisation, les N+C antennes de réception forment un réseau d'antennes ayant une géométrie telle que si on désigne par $\Gamma_k$ l'ensemble des coordonnées cartésiennes de (C+1) antennes de réception notées RX$_k$, RX$_{k+1}$,..., RX$_{k+C}$, il existe une translation et/ou une rotation permettant de passer de $\Gamma_1$ à $\Gamma_k$ quel que soit k compris entre 1 et N.

Par exemple les N+C antennes de réception peuvent former un réseau circulaire ou un réseau linéaire dans lesquels les antennes de réception sont régulièrement espacées.

Selon un autre aspect, l'invention vise un système de transmission multi-antennes comprenant :

- un dispositif émetteur conforme à l'invention ; et
- un dispositif récepteur conforme à l'invention.

Le dispositif d'émission, le dispositif récepteur et le système de transmission multi-antennes disposent des mêmes avantages que ceux cités précédemment pour le procédé d'émission et le procédé de réception selon l'invention.

On peut également envisager, dans d'autres modes de réalisation, que le procédé d'émission, le procédé de réception, le dispositif émetteur, le dispositif récepteur et le système de transmission multi-antennes selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de façon schématique, un système de transmission, un dispositif émetteur et un dispositif récepteur conformes à l'invention, dans un mode particulier de réalisation ;
- les figures 2A et 2B représentent, de façon schématique, l'architecture matérielle du dispositif émetteur et du dispositif récepteur de la figure 1 ;
- les figures 3A et 3B illustrent deux exemples de géométries de réseaux d'antennes pouvant être envisagés au niveau du dispositif récepteur ;
- la figure 4 représente les principales étapes d'un procédé d'émission et d'un procédé de réception selon l'invention, lorsqu'ils sont mis en oeuvre respectivement par le dispositif émetteur et par le dispositif récepteur de la figure 1, dans un mode particulier de réalisation ;
- la figure 5 représente un exemple de paramètres C, KR et LR vérifiant une condition de focalisation autour d'une antenne cible RX$_n$ ; et
- la figure 6 représente un exemple de paramètres C, KR et LR vérifiant une condition de channel hardening.

Description détaillée de l'invention

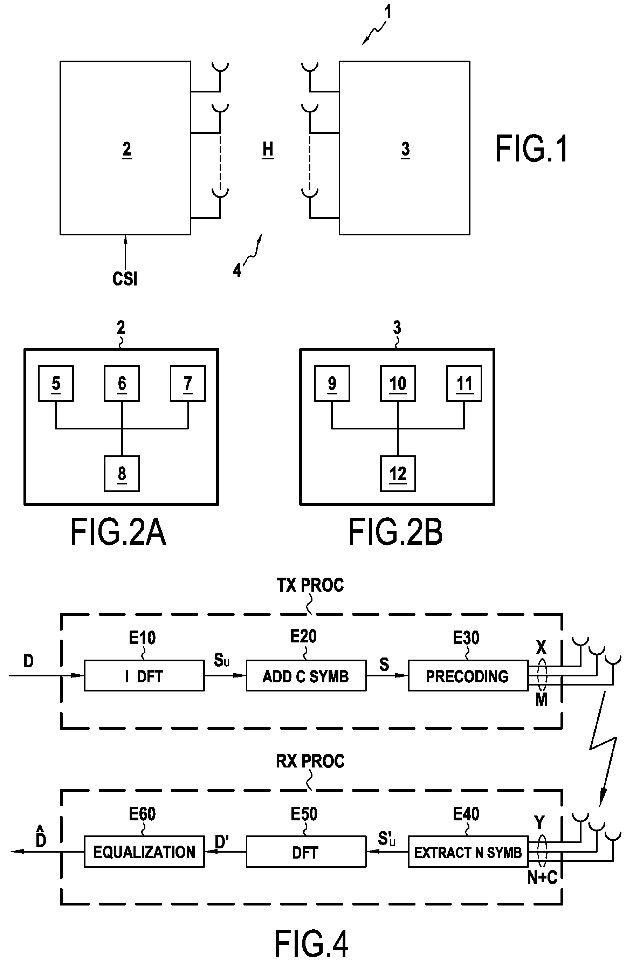

La **figure 1** représente, dans son environnement, un système 1 de transmission multi-antennes d'un réseau de télécommunications NW (non représenté), conforme à l'invention, dans un mode particulier de réalisation.

Le réseau de télécommunications NW est ici un réseau de télécommunications mobiles, offrant par exemple un mode de communication selon un mode TDD (Time Division Duplex). Toutefois, cette hypothèse n'est pas limitative, l'invention s'appliquant également par exemple à des réseaux de télécommunications fonctionnant en mode FDD (Frequency Division Duplex).

Par ailleurs, l'invention s'applique aussi bien en voie montante (sens terminal vers station de base) qu'en voie descendante (sens station de base vers terminal) du réseau de télécommunications sans fil NW.

Conformément à l'invention, le système 1 de transmission comporte :

- un dispositif émetteur 2, conforme à l'invention, comportant M antennes d'émission TX$_1$, TX$_2$, ..., TX$_M$, M étant un entier supérieur ou égal à 1 ; et
- un dispositif récepteur 3, conforme à l'invention, comportant N+C antennes d'émission RX$_1$, RX$_2$, ..., RX$_{N+C}$, N et C étant des entiers supérieurs ou égaux à 1. On suppose ici que $N = 2^p$, p désignant un entier positif supérieur ou égal à 1.

Le dispositif émetteur 2 et le dispositif récepteur 3 sont séparés par un canal de propagation 4. On suppose ici que le canal 4 est un canal plat en fréquence (flat fading), autrement dit, toutes les fréquences sont atténuées de façon similaire, de sorte que chaque sous-canal de propagation entre une antenne d'émission $TX_m$ et une antenne de réception $RX_n$ peut être modélisé par un coefficient complexe unique (i.e. un seul trajet).

Ainsi, le canal 4 peut être modélisé par une matrice de dimensions (N+C)xM de composantes complexes $h_{m,n}$ avec m=1,...M et n=1,...,N+C, la composante $h_{m,n}$ désignant le coefficient du canal entre l'antenne d'émission $TX_m$ et l'antenne de réception $RX_n$.

On note que dans le cas d'un canal de propagation sélectif en fréquence (i.e. multi-trajets), si une technique multi-porteuse est utilisée (par exemple l'OFDM), on a un système de communication avec un canal plat en fréquence pour chaque sous-porteuse, de sorte que l'invention s'applique pour chacun de ces systèmes indépendamment.

Dans l'exemple envisagé ici, comme décrit précédemment, on se place dans un contexte de communications en mode TDD (Time Division Duplex). Dans un tel contexte, il est généralement admis une réciprocité entre le canal en voie montante et le canal en voie descendante. Autrement dit, l'estimation du canal ou CSI (Channel State Information en anglais) réalisée en voie montante s'avère bien représenter le canal en voie descendante et vice-versa. Une telle estimation peut donc être utilisée en émission, par exemple par le dispositif émetteur 2.

En variante, dans un contexte FDD, une voie de retour entre le dispositif émetteur 2 et le dispositif récepteur 3 peut être mise en oeuvre afin que le dispositif émetteur 2 puisse disposer d'une connaissance du canal en émission, estimée puis remontée par le dispositif récepteur 3.

Dans le mode de réalisation décrit ici, le dispositif émetteur 2 et le dispositif récepteur 3 disposent de l'architecture matérielle d'un ordinateur.

Ainsi, en référence à la **figure 2A**, le dispositif émetteur 2 comporte notamment, un processeur 5, une mémoire vive 6, une mémoire morte 7, et des moyens 8 de communication lui permettant d'émettre des signaux sur le réseau de communication NW à destination d'autres équipements comme notamment à destination du dispositif récepteur 3. Ces moyens de communication intègrent notamment les M antennes d'émission du dispositif émetteur 2, ainsi que des moyens de mise en forme des signaux émis sur les M antennes d'émission conformément aux protocoles des communications définis sur le réseau de télécommunications NW.

La mémoire morte 7 du dispositif émetteur 2 constitue un support d'enregistrement conforme à l'invention, lisible par le processeur 5 et sur lequel est enregistré un programme d'ordinateur conforme à l'invention, comportant des instructions pour l'exécution des étapes d'un procédé d'émission selon l'invention.

De façon similaire, en référence à la **figure 2B**, le dispositif récepteur 3 comporte notamment, un processeur 9, une mémoire vive 10, une mémoire morte 11, et des moyens 12 de communication lui permettant d'émettre des signaux sur le réseau de communication NW à destination d'autres équipements, comme par exemple à destination du dispositif émetteur 2. Ces moyens de communication intègrent notamment les N+C antennes de réception du dispositif récepteur 3.

La mémoire morte 11 du dispositif récepteur 3 constitue un support d'enregistrement conforme à l'invention, lisible par le processeur 9 et sur lequel est enregistré un programme d'ordinateur conforme à l'invention, comportant des instructions pour l'exécution des étapes d'un procédé de réception selon l'invention.

Dans le mode de réalisation décrit ici, les N+C antennes de réception du dispositif récepteur 3 forment un réseau d'antennes ayant une géométrie telle que si l'ensemble $\Gamma_k$ désigne l'ensemble des coordonnées cartésiennes $\{(x_{k+i}, y_{k+i}, z_{k+i}), i = 0, ..., C\}$ de (C+1) antennes $RX_k, RX_{k+1},..., RX_{k+C}$, il existe une translation et/ou une rotation permettant de passer de $\Gamma_1$ à $\Gamma_k$ quel que soit k compris entre 1 et N.

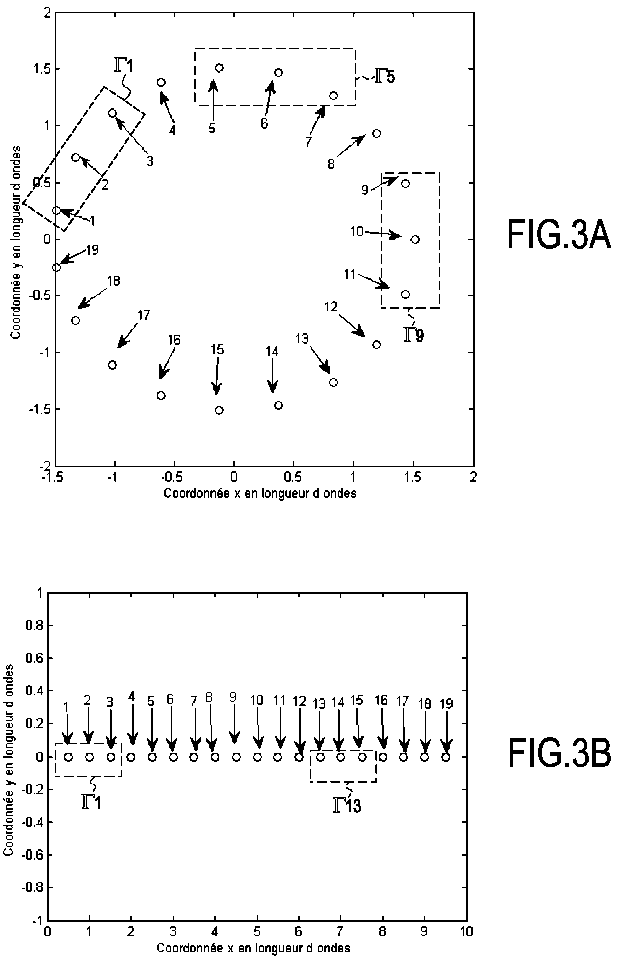

Les **figures 3A et 3B** illustrent deux exemples de géométries vérifiant une telle condition. Par souci de simplification, ces géométries sont illustrées en deux dimensions.

Plus précisément, la figure 3A représente un réseau d'antennes circulaire formé de N+C antennes espacées régulièrement d'un même angle $\theta$, selon un axe circulaire et une direction, les antennes étant numérotées suivant cette direction par ordre croissant. Dans l'exemple représenté, N=16 (i.e. p=4) et C=2. A titre illustratif, trois ensembles $\Gamma_1$, $\Gamma_5$ et $\Gamma_9$ sont représentés sur la figure 3A. Ces ensembles forment respectivement une même figure géométrique à une rotation près.

La figure 3B représente un réseau d'antennes linéaire formé de N+C antennes espacées régulièrement selon un axe linéaire et une direction, les antennes étant numérotées suivant cette direction par ordre croissant. Dans l'exemple représenté, N=16 (i.e. p=4) et C=2. A titre illustratif, deux ensembles $\Gamma_1$ et $\Gamma_{13}$ sont représentés sur la figure 3B. Ces ensembles forment respectivement une même figure géométrique à une translation près.

Nous allons maintenant décrire, en référence à la **figure 4,** les principales étapes d'un procédé d'émission et d'un procédé de réception conformes à l'invention, dans un mode particulier de réalisation dans lequel ils sont mis en oeuvre respectivement par le dispositif émetteur 2 et le dispositif récepteur 3 de la figure 1. On note que le schéma de transmission décrit ici est un schéma mono-porteuse.

Dans le mode de réalisation décrit ici, par souci de simplification, on se limite au traitement d'un symbole pour illustrer les étapes du procédé d'émission et du procédé de réception. Toutefois, l'invention permet bien évidemment de transmettre des flux de symboles, les étapes décrites étant alors réalisées pour chaque symbole du flux.

Nous allons tout d'abord décrire les principales étapes du procédé d'émission selon l'invention mises en oeuvre par le dispositif émetteur 2 (étapes regroupées sous l'étape générale TX PROC).

Conformément à l'invention, un bloc de N symboles de données, noté $D=(D_1, D_2,..., D_N)$, est tout d'abord multiplexé en fréquence spatiale (étape E10), i.e. on associe chaque symbole $D_n$ à une fréquence spatiale $fs(n)$, $n=1,...,N$.

Les symboles de données $D_n$, $n=1,...,N$ sont ici des symboles à valeurs complexes d'une constellation quelconque (ex. QPSK (Quadrature Phase Shift Keying) ou QAM (Quadrature Amplitude Modulation)). L'invention s'applique bien entendu également à des symboles à valeurs réelles, par exemple issus d'une modulation BPSK (Binary Phase Shift Keying).

Pour illustrer la notion de fréquence spatiale $fs$, considérons un signal réel et continu $SiG(x)$ reçu à une position x, x désignant une coordonnée curviligne exprimée en mètre. Le signal $SiG(x)$ est un signal spatial, qui peut être décomposé en fréquences spatiales $fs$ sous la forme suivante :

$$SiG(x) = \lim_{FS \to \infty} \frac{1}{FS} \int_{-FS/2}^{+FS/2} A(fs) \cos(2\pi fs.x + \phi(fs)) \, dfs$$

où $A(fs)$ et $\phi(fs)$ sont des coefficients issus de la décomposition du signal $SiG(x)$ en fréquences spatiales. On note donc que la notion de « fréquence spatiale » est une relation duale de la notion d'espace ; elle n'a pas de relation à proprement parler avec une quelconque notion de temps ou de fréquence.

Pour illustrer maintenant le concept de fréquence spatiale dans le domaine discret et complexe, on désigne par $R_n$ l'échantillon spatial discret reçu à l'antenne de réception n positionnée spatialement à la coordonnée $x_n$. On suppose qu'on a N antennes de réception distinctes et donc N échantillons spatiaux discrets distincts.

Tout échantillon $R_n$ peut se décomposer en N fréquences spatiales en utilisant une transformée de Fourier discrète inverse, de la manière suivante :

$$R_n = \frac{1}{\sqrt{N}} \sum_{p=1}^{p=N} U_p e^{j\frac{2\pi(n-1)(p-1)}{N}}$$

chaque fréquence spatiale portant un coefficient complexe $U_p$, $p=1,...,N$.

Autrement dit, le principe du multiplexage en fréquence spatiale consiste à associer les symboles à transmettre $D_n$, $n=1,...,N$ sur N fréquences spatiales, c'est-à-dire à choisir :

$$U_p = D_p, \ p=1,...,N.$$

On note que ce principe de multiplexage en fréquence spatiale est différent du principe de multiplexage spatial connu de l'état de la technique, qui consiste à associer directement les symboles à transmettre sur N antennes de réception et donc à ne pas utiliser de décomposition en fréquences spatiales (i.e. $R_p = D_p$, pour $p=1,...,N$).

Le multiplexage du bloc D en fréquence spatiale est réalisé à partir d'une transformée de Fourier inverse, et plus précisément dans le mode de réalisation décrit ici en utilisant une transformée de Fourier discrète inverse ou IDFT (Inverse Discrete Fourier Transform) de dimension $N=2^p$. Ainsi, si $A^{IDFT}$ désigne la matrice de dimensions NxN de cette transformée de Fourier inverse, chaque composante $A_{n,m}^{IDFT}$ de cette matrice, $n,m=1,...,N$ est définie par :

$$A_{n,m}^{IDFT} = \frac{1}{\sqrt{2^p}} e^{+j2\pi\frac{(n-1)(m-1)}{2^P}}$$

Autrement dit, durant l'étape de multiplexage en fréquence spatiale E10, le dispositif émetteur 2 calcule un bloc de N symboles spatiaux dits utiles notés $S_u$ tel que :

$$S_u = A^{IDFT} D$$

Ainsi, l'étape de multiplexage en fréquence spatiale E10 consiste à associer chaque symbole de données $D_n$, n=1,...,N à une fréquence spatiale, en utilisant une opération IDFT. Les symboles issus de cette opération sont des symboles spatiaux, chaque symbole spatial étant associé à une antenne de réception. Comme mentionné précédemment cette étape se distingue de l'état de la technique, dans lequel on associe directement (i.e. sans décomposition) chaque symbole de donnée $D_n$ à une antenne de réception.

Puis, conformément à l'invention, le dispositif émetteur 2 ajoute au bloc $S_u$ de symboles spatiaux utiles, C symboles spatiaux de redondance (étape E20), sous la forme d'un préfixe de KT symboles spatiaux de redondance, ajouté en tête du bloc $S_u$, et d'un suffixe de LT symboles spatiaux de redondance, ajouté à la suite du bloc $S_u$, avec LT+KT=C.

On notera que LT et KT désignent deux paramètres entiers quelconques supérieurs ou égaux à 0 tels que LT+KT=C. Ainsi par exemple, on peut prendre KT=C, LT = 0 (ajout d'un préfixe uniquement), ou KT=0 et LT=C (ajout d'un suffixe uniquement).

Dans l'exemple envisagé ici, le préfixe et le suffixe ajoutés au bloc de symboles spatiaux utiles $S_u$ sont cycliques, i.e. le préfixe ajouté est constitué des KT derniers symboles spatiaux utiles de $S_u$, et le suffixe ajouté est constitué des LT premiers symboles spatiaux utiles de $S_u$. Ainsi, si Z désigne le bloc de N+C données obtenu à l'issue de cette étape de redondance, on a :

$$S_{KT+p} = S_{u,p} \text{ pour } 1 \leq p \leq N, \text{ pour la partie centrale.}$$

$$S_p = S_{u,N-KT+p} \text{ pour } 1 \leq p \leq KT, \text{ pour le préfixe}$$

$$S_{KT+N+p} = S_{u,p} \text{ pour } 1 \leq p \leq LT, \text{ pour le suffixe.}$$

où $S_p$, respectivement $S_{u,p}$, désigne le p-ième symbole du bloc de symboles spatiaux $S$, respectivement du bloc de symboles spatiaux utiles $S_u$.

Le bloc $S$ de N+C symboles spatiaux est ensuite précodé, à l'aide d'une matrice de précodage de focalisation $Q$ (matrice de focalisation au sens de l'invention), de dimensions Mx(N+C) (étape E30). Cette étape de précodage permet de focaliser chaque symbole spatial $S_n$ vers une antenne de réception $RX_n$ du dispositif récepteur 3, et résulte en un bloc $X$ de M symboles spatiaux précodés tel que :

$$X = QS$$

La matrice de focalisation $Q$ est, dans le mode de réalisation décrit ici, une matrice de retournement temporel, définie, de façon connue en soi, par :

$$Q = \hat{H}^H$$

où $^H$ désigne l'opérateur hermitien et H désigne la matrice des coefficients estimés du canal de propagation MIMO 4, entre les M antennes d'émission du dispositif émetteur 2 et les (N+C) antennes de réception du dispositif récepteur 3.

La matrice H est obtenue à l'aide de techniques d'estimation du canal de propagation 4 connues de l'homme du métier et non décrites ici, par exemple grâce à l'émission de symboles pilotes. Dans l'exemple envisagé ici, on se place dans un contexte TDD où la réciprocité du canal de propagation entre la voie montante et la voie descendante est généralement admise, comme décrit précédemment. L'estimation du canal disponible au niveau du dispositif émetteur 2 est donc issue d'une estimation réalisée par le dispositif émetteur 2 lors d'une communication mise en oeuvre dans le sens dispositif 3 vers dispositif 2.

En variante, lorsque le canal n'est pas réciproque entre la voie montante et la voie descendante (par exemple, dans un contexte FDD), l'estimation du canal 4 peut être réalisée par le dispositif récepteur 3 et envoyée, par l'intermédiaire d'une voie de retour, au dispositif émetteur 2.

Le bloc $X = (X_1, X_2,..., X_M)$ de M symboles spatiaux précodés est ensuite émis sur le canal de propagation 4 via les M antennes d'émission $TX_1$, $TX_2$,..., $TX_M$ du dispositif émetteur 2. Plus précisément, chaque symbole spatial précodé $X_m$, du bloc $X$ est émis sur l'antenne $TX_m$, m=1,...,M.

Les symboles émis par les antennes $TX_m$ se propagent dans le canal de propagation 4 et sont reçus sur les N+C antennes de réception $RX_1$, $RX_2$, ..., $RX_{N+C}$ du dispositif récepteur 3.

Nous allons tout d'abord décrire les principales étapes du procédé de réception selon l'invention mises en oeuvre par le dispositif récepteur 3 (étapes regroupées sous l'étape générale RX PROC).

Le dispositif récepteur reçoit sur ses N+C antennes de réception le signal $Y = (Y_1, Y_2,..., Y_{N+C})$ composés de (N+C) symboles spatiaux reçus, et répartis sur les N+C antennes de réception. Le bloc de (N+C) symboles spatiaux reçus $Y$ est tel que :

$$Y = \underbrace{HQ}_{H^{eq}} S + No$$

où :

- $H^{eq}$ désigne la matrice de dimensions (N+C)x(N+C) du canal équivalent entre le bloc de M symboles spatiaux émis $S$ et le bloc de (N+C) symboles spatiaux reçus $Y$, après précodage par la matrice de focalisation Q et propagation dans le canal de propagation 4, et
- $No$ désigne un vecteur de dimension N+C, représentant un bruit blanc additif gaussien au niveau du dispositif récepteur 3.

Conformément à l'invention, le dispositif récepteur 3 extrait N symboles spatiaux utiles reçus parmi les N+C symboles spatiaux reçus du signal Y (étape E40), pour former un bloc $S'_u = (S'_{u,1}, ..., S'_{u,N})$ de N symboles spatiaux utiles reçus. Plus particulièrement, au cours de cette étape d'extraction, il réalise l'opération suivante :

$$S'_{u,n} = Y_{KR+n}$$

pour $1 \leq n \leq N$, KR étant un paramètre entier positif ou nul tel que KR+LR=C, LR étant également un paramètre entier positif ou nul. Cette étape consiste à absorber les interférences inter-antennes.

Dans le mode de réalisation décrit ici, on choisit avantageusement les paramètres C, KR et LR de sorte à vérifier deux conditions, à savoir :

- une première condition de focalisation, autour d'une antenne de réception $RX_n$ cible (et plus précisément sur C=KR+LR antennes de réception réparties autour de l'antenne cible), sélectionnée parmi les antennes de réception $RX_1$, $RX_2$,..., $RX_{N+C}$ du dispositif récepteur 3, du symbole spatial $S_n$ émis par le dispositif émetteur 2 à destination de l'antenne cible $RX_n$ ; et
- une seconde condition dite de channel hardening, visant à garantir que la tache focale formée par ce symbole autour de cette antenne de réception cible est invariante ou sensiblement invariante quelle que soit la position de l'antenne cible. On rappelle qu'une tache focale caractérise le niveau du signal destiné à cette antenne de réception, reçu sur les antennes de réception du dispositif récepteur.

Dans le mode de réalisation décrit ici, la première condition de focalisation consiste à déterminer les paramètres C, KR et LR de sorte qu'une probabilité P que :

$$\left\{ \left| \frac{H^{eq}_{n,n+\ell}}{H^{eq}_{n,n}} \right| \leq \varepsilon_{foc}, \text{pour } \ell \text{ entier tel que } \ell > LR \text{ ou } \ell < -KR, 1 \leq n+\ell \text{ et } 0 \leq \varepsilon_{foc} < 1 \right\}$$

soit inférieure à une valeur *Pmin* déterminée, comprise entre 0 et 1. L'indice *n* désigne l'index de l'antenne de réception cible $RX_n$ considérée. $\varepsilon_{foc}$ est choisi de préférence petit, par exemple $\varepsilon_{foc}$ = 0.1.

Cette condition permet de s'assurer qu'en dehors d'un espace restreint défini par l'antenne de réception cible et C antennes réparties autour de l'antenne cible (KR antennes avant, et LR antennes après l'antenne cible), la puissance du signal reçue est faible par rapport à la puissance du signal reçue au niveau de l'antenne cible RX$_n$.

En variante, cette première condition de focalisation peut être formulée différemment. Ainsi par exemple, on peut envisager de déterminer les paramètres C, KR et LR de sorte qu'une probabilité P' que :

$$\left\{ \left| \frac{Z_{n,n+\ell}}{P_{noise}} \right| \leq \varepsilon_{foc}, \text{pour } \ell \text{ entier tel que } \ell > LR \text{ ou } \ell < -KR, 1 \leq \ell + n, \text{ et } 0 \leq \varepsilon_{foc} < 1 \right\}$$

soit inférieure à une valeur *Pmin'* déterminée, comprise entre 0 et 1, où :

- *n* désigne l'index de l'antenne de réception cible considérée RX$_n$ ;
- $P_{noise}$ désigne la puissance de bruit au niveau de l'antenne de réception cible RX$_n$ ;
- $Z_{n,n+\ell}$ désigne la puissance reçue au niveau de l'antenne de réception cible RX$_n$ associée au symbole spatial $S_{n+\ell}$.

$\varepsilon_{foc}$ est choisi de préférence petit, par exemple $\varepsilon_{foc}$ = 0.1. Le rapport signal-à-bruit $\left| \frac{Z_{n,n+\ell}}{P_{noise}} \right|$ peut être estimé de façon connue en soi, à l'aide de symboles pilotes.

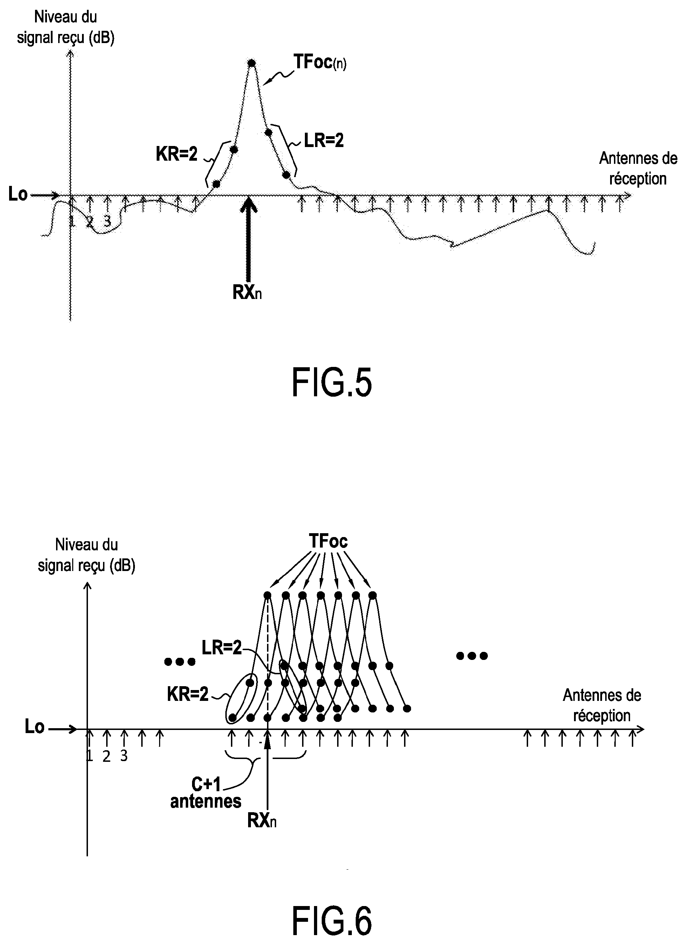

La **figure 5** illustre un exemple de tache focale TFoc(n) obtenue sur une antenne cible RX$_n$ du dispositif récepteur 3, lorsque la première condition de focalisation est vérifiée. Cette tache focale est centrée sur l'antenne de réception cible RX$_n$ et se répartit sur KR=LR=2 antennes de part et d'autre de l'antenne cible. Sur cette figure Lo désigne le niveau de puissance de signal en dessous duquel le signal est considéré comme négligeable face au bruit du dispositif récepteur.

Dans le mode de réalisation décrit ici, la seconde condition de focalisation de channel hardening consiste à déterminer les paramètres C, KR et LR de sorte qu'il existe une forme de tache focale représentée par un vecteur de dimension C+1 v = (v$_{-LR}$, v$_{-LR+1}$,...,v$_{KR}$) de nombres complexes telle que, quelle que soit l'antenne de réception cible RX$_n$ considérée du dispositif récepteur, la forme d'une tache focale centrée sur cette antenne de réception et représentée par un vecteur de dimension C+1 A$_n$ = (A$_{n,-LR}$, A$_{n,-LR+1}$,..., A$_{n,KR}$) de nombres complexes avec $A_{n,n+\ell} = H_{n,n+\ell}^{eq}$ pour -LR $\leq \ell \leq$ KR, vérifie :

$$d(A_n, v) \leq d_{max}$$

où :

- $d_{max}$ est une valeur prédéterminée, et indépendante de *n*.
- $d(A_n, v)$ désigne une distance entre les formes de tache focale A$_n$ et *v*. Cette distance peut être par exemple le ratio entre la norme quadratique du vecteur *(A$_n$ - v)* sur la norme quadratique du vecteur *v*. La distance $d_{max}$ est alors comprise entre 0 et 1 (par exemple $d_{max}$ = 0.1).

On note que la détermination des paramètres C, KR et LR peut être réalisée en étape préalable aux étapes mises en oeuvre dans le procédé de réception, par exemple à l'aide de simulations.

La **figure 6** illustre la condition de channel hardening sur C antennes autour de l'antenne cible et l'invariance des taches focales en fonction de la position de l'antenne cible.

Conformément à l'invention, le bloc de symboles spatiaux utiles reçus S'$_u$ extrait à l'étape E40 est ensuite démultiplexé au cours d'une étape de démultiplexage en fréquence spatiale (étape E50), réalisant l'opération inverse de l'étape E10. Cette étape est réalisée à l'aide d'une transformée de Fourier Discrète ou DFT de dimension N=2$^p$.

Ainsi, si $A^{DFT}$ désigne la matrice de dimensions NxN de cette transformée de Fourier, chaque composante $A_{n,m}^{DFT}$ de cette matrice, n, m=1,...,N est définie par :

$$A_{n,m}^{DFT} = \frac{1}{\sqrt{2^p}} e^{-j2\pi \frac{(n-1)(m-1)}{2^P}}$$

Autrement dit, durant l'étape de démultiplexage en fréquence spatiale E50, le dispositif récepteur 3 calcule un bloc de N symboles de données noté $D' = (D'_1, D'_2,...,D'_N)$ tel que :

$$D' = A^{DFT} S'_u$$

Le bloc D'de N symboles de données est ensuite égalisé (étape E60).

A cette fin, le dispositif récepteur 3 considère que, suite aux étapes E10 à E50 précédemment décrites, le bloc de symboles de données D' peut s'écrire sous la forme suivante :

$$D' = \underbrace{A^{DFT} H^{eq}_{circ} A^{IDFT}}_{\Delta^{eq}} D + A^{DFT} N_{0,u}$$

où :

- $H^{eq}_{circ}$ désigne la matrice du canal équivalent « replié » de taille NxN, dans le domaine des fréquences spatiales (c'est-à-dire la matrice de canal équivalent entre le bloc de symboles spatiaux utiles $S_u$ et le bloc de symboles spatiaux utiles reçus $S'_u$ ). Pour n=1,...N, et m=1,...N, chaque composante $H^{eq}_{circ,n,m}$ de la matrice $H^{eq}_{circ}$ est donnée par :

$$H^{eq}_{circ,n,m} = H^{eq}_{u,n,m} + g(H^{eq}_{u,n,m})$$

avec $g\left(H^{eq}_{u,n,m}\right) = 0$ si N+m>N+C, et $g\left(H^{eq}_{u,n,m}\right) = H^{eq}_{u,n,m+N}$ si N+m≤N+C.

$H^{eq}_u$ est la matrice de taille Nx(N+C) du canal équivalent entre le bloc de symboles spatiaux S et le bloc de symboles spatiaux utiles reçus $S'_u$ définie par les coefficients suivants:

$$H^{eq}_{u,n,p} = H^{eq}_{KR+n,p} \text{ pour } 1 \leq n \leq N \text{ et } 1 \leq p \leq N + C.$$

- $N_{0,u}$ désigne le bruit extrait du signal reçu au cours de l'étape E40 avec les coefficients suivants:

$$N_{0,u,n} = N_{0,KR+n} \text{ pour } 1 \leq n \leq N.$$

Cette hypothèse s'avère en pratique vérifiée notamment lorsque les paramètres C, KR et LR vérifient les conditions de focalisation et de channel hardening mentionnées précédemment. Dans le cas contraire, il s'agit d'une approximation faite par le dispositif récepteur 3 afin de d'égaliser simplement le signal D'.

On note que, sous l'hypothèse d'une estimation parfaite du canal, la matrice $\Delta^{eq}$ est diagonale.

Cette matrice peut en pratique être estimée à l'aide de signaux pilotes de façon connue en soi. Ainsi, par exemple, une telle méthode peut consister à traiter un bloc $D_{pilote}$ de N symboles pilotes, connu du dispositif émetteur 2 et du dispositif récepteur 3, conformément aux étapes E10 à E50 présentées précédemment. Chaque composante $\Delta^{eq}_n$ , n=1,...,N de la diagonale de la matrice $\Delta^{eq}$ est alors obtenue de façon très simple par :

$$\hat{\Delta}^{eq}_n = \frac{D'pilote,n}{Dpilote,n}$$

si $D'pilote$ désigne le bloc de symboles pilotes utiles reçus obtenus à l'issue de l'étape E50.

Le dispositif récepteur 3 estime alors le bloc $\hat{D}$ des symboles de données émis en égalisant D' par la matrice diagonale $\hat{\Delta}^{eq}$, sans recourir à une inversion matricielle, mais par des méthodes classiques, connues de l'homme du métier, exploitant le fait que $\Delta^{eq}$ est diagonale. Par exemple, chaque symbole de données $\hat{D}_n$ , n=1,...,N du bloc $\hat{D}$ est calculé par :

$$\widehat{D}_n = \frac{D'_n}{\widehat{\Delta}_n^{eq}}$$

On note, que si les conditions de focalisation (ex. la première condition de focalisation) et de channel hardening mentionnées précédemment sont vérifiées, par exemple pour $\varepsilon_{floc} = \varepsilon_{hard} = 0$ et $P_{min} = 1$ pour simplifier les calculs, on peut montrer que la matrice $H_{circ}^{eq}$ existe et vérifie :

$$H_{circ}^{eq} S_u = H^{eq} S$$

$H_{circ}^{eq}$ est circulante et donc diagonalisable dans une base de Fourier, c'est-à-dire qu'il existe une matrice diagonale $\Delta^{eq}$ telle que :

$$H_{circ}^{eq} = A^{IDFT} \Delta^{eq} A^{DFT}$$

D'autre part : $A^{IDFT} A^{DFT} = I$, où I désigne la matrice identité. $\Delta^{eq}$ correspond donc à la matrice du canal équivalent dans le domaine des fréquences spatiales.

Par ailleurs :

$$D' = A^{DFT} S'_u = \Delta^{eq} D + A^{DFT} N_{0,u}$$

L'étape d'égalisation qui consiste à calculer

$$\widehat{D}_n = \frac{D'_n}{\widehat{\Delta}_n^{eq}}$$

mène donc, en supposant que le bruit soit nul à $\hat{D}_n = D_n$. Autrement dit, les interférences entre symboles sont parfaitement éliminées.

L'invention s'applique de façon générale aux communications sans fil.

Dans le mode de réalisation décrit ici, le signal transmis sur chaque antenne d'émission est un signal monoporteuse avec un canal plat en fréquence entre chaque antenne d'émission et de réception. L'invention peut toutefois également être appliquée pour la transmission d'un signal multi-porteuse : dans ce cas, les différentes étapes du procédé d'émission et du procédé de réception sont mises en oeuvre pour chaque sous-porteuse du signal multi-porteuse.

Ainsi l'invention peut être avantageusement appliquée de manière plurielle à une pluralité de bandes de fréquences étroites ; elle peut, par exemple, s'appliquer à l'OFDM : en effet, un système OFDM à T sous-porteuses, peut être vu comme un ensemble de T systèmes indépendants dont le canal est plat en fréquence. Pour chacun de ces systèmes, la solution décrite peut être appliquée.

L'invention s'applique également aux technologies à base d'OFDM, notamment telles que définies dans le standard LTE (Long Term Evolution).

**Revendications**

**1.** Procédé d'émission de symboles de données par un dispositif émetteur (2) comportant un nombre M d'antennes d'émission, à destination d'un dispositif récepteur (3) comportant un nombre N+C d'antennes de réception, M, N et C étant des paramètres entiers supérieurs ou égaux à 1, ledit procédé d'émission comprenant :

- une étape (E10) de multiplexage en fréquence spatiale d'un bloc de N symboles de données $D_1, D_2, ..., D_N$ résultant en un bloc de N symboles spatiaux utiles $S_{u,1}, S_{u,2}, ..., S_{u,N}$, cette étape utilisant une transformée de Fourier discrète inverse (IDFT) ;

- une étape (E20) d'ajout de C symboles spatiaux de redondance au bloc de N symboles spatiaux utiles, résultant en un bloc de N+C symboles spatiaux $S_1, S_2, ..., S_{N+C}$ ; et

- une étape (E30) de précodage du bloc de N+C symboles spatiaux $S_1, S_2, ..., S_{N+C}$ à l'aide d'une matrice de focalisation de dimensions Mx(N+C), ladite étape de précodage fournissant M symboles spatiaux précodés $X_1$, $X_2, ..., X_M$, chaque symbole spatial précodé étant émis sur une antenne d'émission distincte du dispositif émetteur.

2. Procédé d'émission selon la revendication 1 dans lequel C=KT+LT, LT et KT étant des paramètres entiers positifs ou nuls, l'étape (E20) d'ajout de C symboles spatiaux de redondance comprenant :

- l'insertion d'un suffixe de LT symboles à la suite du bloc $S_{u,1}, S_{u,2}, ..., S_{u,N}$ de N symboles de données multiplexés en fréquence spatiale ; et/ou

- l'insertion d'un préfixe de KT symboles en tête du bloc $S_{u,1}, S_{u,2}, ..., S_{u,N}$ de N symboles de données multiplexés en fréquence spatiale.

3. Procédé d'émission selon la revendication 2, dans lequel :

- KT=C et LT=0 ; ou
- KT=0 et LT=C.

4. Procédé d'émission selon la revendication 1, dans lequel la matrice de focalisation est une matrice de retournement temporel obtenue à partir d'une estimation d'une matrice de canal de propagation (4) entre les M antennes d'émission du dispositif émetteur et les N+C antennes de réception du dispositif récepteur.

5. Programme d'ordinateur comportant des instructions pour l'exécution des étapes du procédé d'émission selon la revendication 1 lorsque ledit programme est exécuté par un ordinateur.

6. Procédé de réception, par un dispositif récepteur (3) comprenant un nombre N+C d'antennes de réception, de N+C symboles spatiaux $Y_1, Y_2, ..., Y_{N+C}$, lesdits symboles spatiaux reçus résultant de la propagation via un canal de propagation (4) de M symboles spatiaux précodés $X_1, X_2, ..., X_M$ émis par un dispositif émetteur (2) via un nombre M d'antennes d'émission, lesdits symboles spatiaux précodés $X_1, X_2, ..., X_M$ étant issus d'un précodage, à l'aide d'une matrice de focalisation, d'un bloc de N+C symboles spatiaux $S_1, S_2, ..., S_{N+C}$, ces symboles spatiaux $S_1$, $S_2, ..., S_{N+C}$ étant issus d'un multiplexage en fréquence spatiale de symboles de données $D_1, D_2, ..., D_N$ utilisant une transformée de Fourier discrète inverse, et d'un ajout de C symboles spatiaux de redondance, M, N et C étant des paramètres entiers supérieurs ou égaux à 1, ledit procédé de réception comprenant :

- une étape (E40) d'extraction de N symboles spatiaux utiles reçus $S'_{u,1}, S'_{u,2}, ..., S'_{u,N}$ parmi lesdits N+C symboles spatiaux reçus $Y_1, Y_2, ..., Y_{N+C}$ ;

- une étape (E50) de démultiplexage en fréquence spatiale des N symboles spatiaux utiles reçus $S'_{u,1}, S'_{u,2}, ..., S'_{u,N}$ utilisant une transformée de Fourier discrète, résultant en un bloc de N symboles de données démultiplexés $D'_1, D'_2, ..., D'_N$ ; et

- une étape d'égalisation du bloc de N symboles de données démultiplexés $D'_1, D'_2, ..., D'N$.

7. Procédé de réception selon la revendication 6, dans lequel C=KR+LR, KR et LR étant des paramètres entiers positifs ou nuls, et dans lequel les N symboles spatiaux utiles reçus $S'_{u,1}, S'_{u,2}, ..., S'_{u,N}$ extraits à l'étape d'extraction vérifient :

$$S'_{u,n} = Y_{n+KR}$$

pour $n$ = 1, ..., $N$.

8. Procédé de réception selon la revendication 7 dans lequel les paramètres C, KR et LR vérifient, pour au moins une antenne de réception dite cible, indexée par $n$ et sélectionnée parmi les N+C antennes de réception du dispositif récepteur (3), une condition de focalisation du symbole spatial $S_n$ sur un espace défini par l'antenne de réception cible indexée par *n* et KR+LR antennes de réception réparties autour de l'antenne de réception cible indexée par *n*.

9. Procédé de réception selon la revendication 8, dans lequel les paramètres C, KR et LR vérifient qu'une probabilité P que :

$$\left\{ \left| \frac{H^{eq}_{n,n+\ell}}{H^{eq}_{n,n}} \right| \leq \varepsilon_{foc}, \text{pour } \ell \text{ entier tel que } \ell > LR \text{ ou } \ell < -KR, 1 \leq \ell + n, \text{et } 0 \leq \varepsilon_{foc} < 1 \right\}$$

soit inférieure à une valeur *Pmin* déterminée, comprise entre 0 et 1, où $H^{eq}$ désigne une matrice de dimensions (N+C)x(N+C) résultant du produit de la matrice de focalisation et d'une matrice représentant le canal de propagation entre les M antennes d'émission du dispositif émetteur et les N+C antennes de réception du dispositif récepteur, $H^{eq}_{j,p}$ désignant la composante située à l'intersection de la j-ième ligne et de la p-ième colonne de la matrice $H^{eq}$.

10. Procédé de réception selon la revendication 8, dans lequel les paramètres C, KR et LR vérifient qu'une probabilité P' que :

$$\left\{ \left| \frac{Z_{n,n+\ell}}{P_{noise}} \right| \leq \varepsilon_{foc}, \text{pour } \ell \text{ entier tel que } \ell > LR \text{ ou } \ell < -KR, 1 \leq \ell + n, \text{et } 0 \leq \varepsilon_{foc} < 1 \right\}$$

soit inférieure à une valeur *P'min* déterminée, comprise entre 0 et 1, où :

- $P_{noise}$ désigne une puissance de bruit au niveau de l'antenne de réception cible indexée par *n;*
- $Z_{n,n+\ell}$ désigne la puissance reçue au niveau de l'antenne de réception cible indexée par *n* associée au symbole spatial $S_{n+\ell}$.

11. Procédé de réception selon la revendication 7, dans lequel les paramètres C, KR et LR vérifient qu'il existe une forme de tache focale représentée par un vecteur de dimension C+1 v = (v$_{-LR}$, v$_{-LR+1}$, ..., v$_{KR}$) de nombres complexes telle que, quelle que soit l'antenne de réception considérée du dispositif récepteur indexée par *n*, la forme d'une tache focale centrée sur cette antenne de réception et représentée par un vecteur de dimension C+1 A$_n$ = (A$_{n,-LR}$, A$_{n,-LR+1}$,..., A$_{n,KR}$) de nombres complexes avec $A_{n,n+\ell} = H^{eq}_{n,n+\ell}$ pour -LR ≤ $\ell$ ≤ KR, 1 ≤ n + $\ell$, vérifie :

$$d(A_n, v) \leq d_{max}$$

où :

- $d_{max}$ est une valeur prédéterminée,
- $d(A_n, v)$ désigne une distance entre les formes de tache focale A$_n$ et v ; et
- $H^{eq}$ désigne une matrice de dimensions (N+C)x(N+C) résultant du produit de la matrice de précodage et d'une matrice représentant le canal de propagation entre les M antennes d'émission du dispositif émetteur et les N+C antennes de réception du dispositif récepteur, $H^{eq}_{j,p}$ désignant la composante située à l'intersection de la j-ième ligne et de la p-ième colonne de la matrice $H^{eq}$.

12. Programme d'ordinateur comportant des instructions pour l'exécution des étapes du procédé de réception selon la revendication 6 lorsque ledit programme est exécuté par un ordinateur.

13. Dispositif émetteur (2) comportant un nombre M d'antennes d'émission, apte à émettre des signaux formés de symboles de données à destination d'un dispositif récepteur (3) comportant un nombre N+C d'antennes de réception, M, N et C étant des paramètres entiers supérieurs ou égaux à 1, ledit dispositif émetteur comprenant :

- des moyens de multiplexage en fréquence spatiale d'un bloc de N symboles de données D$_1$,D$_2$,...,D$_N$, lesdits

moyens utilisant une transformée de Fourier discrète inverse et fournissant un bloc de N symboles spatiaux utiles $S_{u,1}S_{u,2},...,S_{u,N}$ ;
- des moyens d'ajout de C symboles spatiaux de redondance au bloc de N symboles spatiaux utiles, fournissant un bloc de N+C symboles spatiaux $S_1, S_2,..., S_{N+C}$;
- des moyens de précodage du bloc de N+C symboles spatiaux utiles $S_1, S_2, ..., S_{N+C}$ fourni par les moyens d'insertion, à l'aide d'une matrice de focalisation de dimensions Mx(N+C), fournissant M symboles spatiaux précodés $X_1, X_2, ..., X_M$ ; et
- des moyens d'émission de chaque symbole spatial précodé sur une antenne d'émission distincte du dispositif émetteur.

**14.** Dispositif récepteur (3) comportant un nombre N+C d'antennes de réception, apte à recevoir, sur lesdites N+C antennes de réception, N+C symboles spatiaux $Y_1, Y_2, ..., Y_{N+C}$, lesdits symboles spatiaux reçus résultant de la propagation via un canal de propagation (4) de M symboles spatiaux précodés $X_1, X_2, ..., X_M$ émis par un dispositif émetteur (2) via un nombre M d'antennes d'émission, lesdits symboles spatiaux précodés $X_1, X_2, ..., X_M$ étant issus d'un précodage, à l'aide d'une matrice de focalisation, d'un bloc de N+C symboles spatiaux $S_1, S_2, ..., S_{N+C}$, ces symboles spatiaux $S_1, S_2, ..., S_{N+C}$ étant issus d'un multiplexage en fréquence spatiale de symboles de données $D_1, D_2,..., D_N$ utilisant une transformée de Fourier discrète inverse, et d'un ajout de symboles spatiaux de redondance, M, N et C étant des paramètres entiers supérieurs ou égaux à 1, ledit dispositif récepteur comprenant :

- des moyens d'extraction de N symboles spatiaux utiles reçus notés $S'_{u,1}, S'_{u,2}, ..., S'_{u,N}$ parmi lesdits N+C symboles spatiaux reçus $Y_1, Y_2, ..., Y_{N+C}$ ;
- des moyens de démultiplexage en fréquence spatiale des N symboles spatiaux utiles reçus $S'_{u,1}, S'_{u,2}, ..., S'_{u,N}$, utilisant une transformée de Fourier discrète et fournissant un bloc de N symboles de données démultiplexés $D'_1, D'_2, ..., D'_N$ ; et
- des moyens d'égalisation du bloc de N symboles de données démultiplexés $D'_1, D'_2, ..., D'_N$.

**15.** Dispositif récepteur selon la revendication 14 dans lequel les N+C antennes de réception forment un réseau d'antennes ayant une géométrie telle que si on désigne par $\Gamma_k$ l'ensemble des coordonnées cartésiennes de (C+1) antennes de réception notées $RX_k, RX_{k+1},..., RX_{k+c}$, il existe une translation et/ou une rotation permettant de passer de $\Gamma_1$ à $\Gamma_k$ quel que soit k compris entre 1 et N.

**16.** Dispositif récepteur selon la revendication 15 dans lequel les N+C antennes de réception forment un réseau circulaire ou un réseau linéaire et sont régulièrement espacées.

**17.** Système de transmission multi-antennes comprenant :

- un dispositif émetteur conforme à la revendication 13 ; et
- un dispositif émetteur conforme à la revendication 14.

**Patentansprüche**

**1.** Verfahren zum Senden von Datensymbolen durch eine Sendevorrichtung (2), die eine Anzahl M von Sendeantennen aufweist, an eine Empfangsvorrichtung (3), die eine Anzahl N+C von Empfangsantennen aufweist, wobei M, N und C ganzzahlige Parameter größer als oder gleich 1 sind, wobei das Sendeverfahren enthält:

- einen Schritt (E10) des Raumfrequenz-Multiplexierens eines Blocks von N Datensymbolen $D_1, D_2, ..., D_N$, der zu einem Block von N nützlichen Raumsymbolen $S_{u,1}, S_{u,2}, ..., S_{u,N}$, führt, wobei dieser Schritt eine inverse diskrete Fourier-Transformation (IDFT) verwendet;
- einen Schritt (E20) des Hinzufügens von C Redundanz-Raumsymbolen zum Block von N nützlichen Raumsymbolen, der zu einem Block von N+C Raumsymbolen $S_1, S_2, ..., S_{N+C}$ führt; und
- einen Schritt (E30) des Vorcodierens des Blocks von N+C Raumsymbolen $S_1, S_2, ..., S_{N+C}$ mit Hilfe einer Fokussiermatrix mit den Dimensionen Mx(N+C), wobei der Vorcodierschritt M vorcodierte Raumsymbole $X_1, X_2, ..., X_M$ liefert, wobei jedes vorcodierte Raumsymbol auf einer anderen Sendeantenne der Sendevorrichtung gesendet wird.

**2.** Sendeverfahren nach Anspruch 1, wobei gilt C=KT+LT, wobei LT und KT positive oder nullwertige ganzzahlige Parameter sind, wobei der Schritt (E20) des Hinzufügens von C Redundanz-Raumsymbolen enthält:

- das Einfügen eines Suffix von LT Symbolen nach dem Block $S_{u,1}$, $S_{u,2}$, ..., $S_{u,N}$ von N Raumfrequenzmultiplexierten Datensymbolen; und/oder
- das Einfügen eines Präfix von KT Symbolen am Anfang des Blocks $S_{u,1}$, $S_{u,2}$, ..., $S_{u,N}$ von N Raumfrequenz-multiplexierten Datensymbolen.

3. Sendeverfahren nach Anspruch 2, wobei gilt:

   - KT=C und LT=0; oder
   - KT=0 und LT=C.

4. Sendeverfahren nach Anspruch 1, wobei die Fokussiermatrix eine Zeitumkehrmatrix ist, die ausgehend von einer Schätzung einer Ausbreitungskanalmatrix (4) zwischen den M Sendeantennen der Sendevorrichtung und den N+C Empfangsantennen der Empfangsvorrichtung erhalten wird.

5. Computerprogramm, das Anweisungen für die Ausführung der Schritte des Sendeverfahrens nach Anspruch 1 aufweist, wenn das Programm von einem Computer ausgeführt wird.

6. Verfahren zum Empfang, durch eine Empfangsvorrichtung (3), die eine Anzahl N+C von Empfangsantennen enthält, von N+C Raumsymbolen $Y_1$, $Y_2$, ..., $Y_{N+C}$, wobei die empfangenen Raumsymbole aus der Ausbreitung über einen Ausbreitungskanal (4) von M vorcodierten Raumsymbolen $X_1$, $X_2$, ..., $X_M$ resultieren, die von einer Sendevorrichtung (2) über eine Anzahl von M Sendeantennen gesendet werden, wobei die vorcodierten Raumsymbole $X_1$, $X_2$, ..., $X_M$ von einer Vorcodierung, mit Hilfe einer Fokussiermatrix, eines Blocks von N+C Raumsymbolen $S_1$, $S_2$, ..., $S_{N+C}$ stammen, wobei diese Raumsymbole $S_1$, $S_2$, ..., $S_{N+C}$ von einem Raumfrequenz-Multiplex von Datensymbolen $D_1$, $D_2$, ..., $D_N$, das eine inverse diskrete Fourier-Transformation verwendet, und von einer Hinzufügung von C Redundanz-Raumsymbolen stammen, wobei M, N und C ganzzahlige Parameter größer als oder gleich 1 sind, wobei das Empfangsverfahren enthält:

   - einen Schritt (E40) der Entnahme von N empfangenen nützlichen Raumsymbolen $S'_{u,1}$, $S'_{u,2}$, ..., $S'_{u,N}$ unter den N+C empfangenen Raumsymbolen $Y_1$, $Y_2$.... , $Y_{N+C}$;
   - einen Schritt (E50) des Raumfrequenz-Demultiplex der N empfangenen nützlichen Raumsymbole $S'_{u,1}$, $S'_{u,2}$, ..., $S'_{u,N}$ unter Verwendung einer diskreten Fourier-Transformation, was zu einem Block von N demultiplexierten Datensymbolen $D'_1$, $D'_2$, ..., $D'_N$ führt; und
   - einen Schritt der Entzerrung des Blocks von N demultiplexierten Datensymbolen $D'_1$, $D'_2$, ..., $D'_N$.

7. Empfangsverfahren nach Anspruch 6, wobei gilt C=KR+LR, wobei KR und LR positive oder nullwertige ganzzahlige Parameter sind, und wobei die im Entnahmeschritt entnommenen N empfangenen nützlichen Raumsymbole $S'_{u,1}$, $S'_{u,2}$, ..., $S'_{u,N}$ erfüllen:

$$S'_{u,n} = Y_{n+KR}$$

für n = 1, ..., N.

8. Empfangsverfahren nach Anspruch 7, wobei die Parameter C, KR und LR für mindestens eine so genannte Ziel-Empfangsantenne, indexiert durch n und ausgewählt unter den N+C Empfangsantennen der Empfangsvorrichtung (3), eine Fokussierbedingung des Raumsymbols $S_n$ über einen durch die mit n indexierte Ziel-Empfangsantenne und KR+LR um die durch n indexierte Ziel-Empfangsantenne verteilte Empfangsantennen definierten Raum erfüllen.

9. Empfangsverfahren nach Anspruch 8, wobei die Parameter C, KR und LR erfüllen, dass eine Wahrscheinlichkeit P, dass:

$$\left\{ \left| \frac{H^{eq}_{n,n+\ell}}{H^{eq}_{n,n}} \right| \leq \varepsilon_{foc}, \text{für } \ell \text{ eine ganze Zahl derart dass } \ell > LR \text{ oder } \ell < -KR, 1 \leq \ell + n, \text{ und } 0 \leq \varepsilon_{foc} < 1 \right\}$$

geringer ist als ein bestimmter Wert Pmin zwischen 0 und 1, wobei $H^{eq}$ eine Matrix mit Dimensionen (N+C)x(N+C) bezeichnet, die aus dem Produkt der Fokussiermatrix und einer Matrix resultiert, die den Ausbreitungskanal zwischen den M Sendeantennen der Sendevorrichtung und den N+C Empfangsantennen der Empfangsvorrichtung darstellt,

wobei $H^{eq}_{j,p}$ die Komponente bezeichnet, die sich an der Schnittstelle der j-ten Zeile und der p-ten Spalte der Matrix $H^{eq}$ befindet.

10. Empfangsverfahren nach Anspruch 8, wobei die Parameter C, KR und LR erfüllen, dass eine Wahrscheinlichkeit P', dass:

$$\left\{ \left| \frac{Z_{n,n+\ell}}{P_{noise}} \right| \le \varepsilon_{foc}, \text{ für } \ell \text{ eine ganze Zahl derart dass } \ell > LR \text{ oder } \ell < -KR, 1 \le \ell + n, \text{ und } 0 \le \varepsilon_{foc} < 1 \right\}$$

geringer ist als ein bestimmter Wert P'min zwischen 0 und 1, wobei:

- $P_{noise}$ eine Rauschleistung im Bereich der mit n indexierten Ziel-Empfangsantenne bezeichnet;
- $Z_{n,n+\ell}$ die im Bereich der mit n indexierten Ziel-Empfangsantenne empfangene Leistung bezeichnet, die dem Raumsymbol $S_{n+\ell}$ zugeordnet ist.

11. Empfangsverfahren nach Anspruch 7, wobei die Parameter C, KR und LR erfüllen, dass es eine Form eines Brennflecks gibt, die durch einen Dimensionsvektor C+1 $v = (V_{-LR}, V_{-LR+1}, ..., V_{KR})$ komplexer Zahlen dargestellt wird, derart, dass unabhängig von der betrachteten mit n indexierten Empfangsantenne der Empfangsvorrichtung die Form eines auf diese Empfangsantenne zentrierten und durch einen Dimensionsvektor C+1 $A_n = (A_{n,-LR}, A_{n,-LR+1}, ..., A_{n,KR})$ komplexer Zahlen mit $A_{n,n+\ell} = H^{eq}_{n,n+\ell}$ für $-LR \le \ell \le KR$, $1 \le n + \ell$ dargestellten Brennflecks erfüllt:

$$d(A_n, v) \le d_{max}$$

wobei:

- $d_{max}$ ein vorbestimmter Wert ist,
- $d(A_n, v)$ einen Abstand zwischen den Brennfleckformen $A_n$ und $v$ bezeichnet; und
- $H^{eq}$ eine Matrix von Dimensionen (N+C)x(N+C) bezeichnet, die aus dem Produkt der Vorcodiermatrix und einer Matrix resultiert, die den Ausbreitungskanal zwischen den M Sendeantennen der Sendevorrichtung und den N+C Empfangsantennen der Empfangsvorrichtung darstellt, wobei $H^{eq}_{j,p}$ die Komponente bezeichnet, die sich an der Schnittstelle der j-ten Zeile und der p-ten Spalte der Matrix $H^{eq}$ befindet.

12. Computerprogramm, das Anweisungen zur Ausführung der Schritte des Empfangsverfahrens nach Anspruch 6 aufweist, wenn das Programm von einem Computer ausgeführt wird.

13. Sendevorrichtung (2), die eine Anzahl M von Sendeantennen aufweist, die von Datensymbolen geformte Signale an eine Empfangsvorrichtung (3) senden kann, die eine Anzahl N+C von Empfangsantennen aufweist, wobei M, N und C ganzzahlige Parameter größer als oder gleich 1 sind, wobei die Sendevorrichtung enthält:

- Raumfrequenz-Multiplex-Einrichtungen eines Blocks von N Datensymbolen $D_1, D_2, ..., D_N$, wobei die Einrichtungen eine inverse diskrete Fourier-Transformation verwenden und einen Block von N nützlichen Raumsymbolen $S_{u,1}, S_{u,2}, ..., S_{u,N}$ liefern;
- Hinzufügungseinrichtungen von C Redundanz-Raumsymbolen zum Block von N nützlichen Raumsymbolen, die einen Block von N+C Raumsymbolen $S_1, S_2, ..., S_{N+C}$ liefern;
- Vorcodiereinrichtungen des Blocks von N+C nützlichen Raumsymbolen $S_1, S_2, ..., S_{N+C}$, der von den Einfügungseinrichtungen mit Hilfe einer Fokussiermatrix mit Dimensionen Mx(N+C) geliefert wird, die M vorcodierte Raumsymbole $X_1, X_2, ..., X_M$ liefert; und

- Sendeeinrichtungen jedes vorcodierten Raumsymbols auf einer unterschiedlichen Sendeantenne der Sendevorrichtung.

14. Empfangsvorrichtung (3), die eine Anzahl N+C von Empfangsantennen aufweist, die auf den N+C Empfangsan-tennen N+C Raumsymbole $Y_1$, $Y_2$, ..., $Y_{N+C}$ empfangen kann, wobei die empfangenen Raumsymbole aus der Ausbreitung über einen Ausbreitungskanal (4) von M vorcodierten Raumsymbolen $X_i$, $X_2$, ..., $X_M$ resultieren, die von einer Sendevorrichtung (2) über eine Anzahl M von Sendeantennen gesendet werden, wobei die vorcodierten Raumsymbole $X_1$, $X_2$, ..., $X_M$ von einer Vorcodierung, mit Hilfe einer Fokussiermatrix, eines Blocks von N+C Raum-symbolen $S_1$, $S_2$, ..., $S_{N+C}$ stammen, wobei diese Raumsymbole $S_1$, $S_2$, ..., $S_{N+C}$ von einem Raumfrequenz-Multiplex von Datensymbolen $D_1$, $D_2$, ..., $D_N$ unter Verwendung einer inversen diskreten Fourier-Transformation und einer Hinzufügung von Redundanz-Raumsymbolen stammen, wobei M, N und C ganzzahlige Parameter größer als oder gleich 1 sind, wobei die Empfangsvorrichtung enthält:

- Entnahmeeinrichtungen von N empfangenen nützlichen Raumsymbolen bezeichnet mit $S'_{u,1}$, $S'_{u,2}$, ..., $S'_{u,N}$ unter den empfangenen N+C Raumsymbole $Y_1$, $Y_2$, ..., $Y_{N+C}$;
- Raumfrequenz-Demultiplex-Einrichtungen der N empfangenen nützlichen Raumsymbole $S'_{u,1}$, $S'_{u,2}$, ..., $S'_{u,N}$, die eine diskreten Fourier-Transformation verwenden und einen Block von N demultiplexierten Datensymbolen $D'_1$, $D'_2$, ..., $D'_N$ liefern; und
- Entzerrungseinrichtungen des Blocks von N demultiplexierten Datensymbolen $D'_1$, $D'_2$, ..., $D'_N$.

15. Empfangsvorrichtung nach Anspruch 14, wobei die N+C Empfangsantennen ein Antennennetz bilden, das eine derartige Geometrie hat, dass, wenn mit $\Gamma_k$ die Gesamtheit der kartesischen Koordinaten von (C+1) mit $RX_k$, $RX_{k+1}$...., $RX_{k+C}$ bezeichneten Empfangsantennen bezeichnet wird, es eine Translation und/oder eine Rotation gibt, die es ermöglichen, von $\Gamma_1$ zu $\Gamma_k$ zu gehen, unabhängig von k, das zwischen 1 und N liegt.

16. Empfangsvorrichtung nach Anspruch 15, wobei die N+C Empfangsantennen ein kreisförmiges Netz oder ein lineares Netz bilden und gleichmäßig beabstandet sind.

17. Mehrantennen-Übertragungssystem, das enthält:

- eine Sendevorrichtung gemäß Anspruch 13; und
- eine Sendevorrichtung gemäß Anspruch 14.

**Claims**

1. Method of sending of data symbols by a sender device (2) comprising a number M of send antennas, destined for a receiver device (3) comprising a number N+C of receive antennas, M, N and C being integer parameters greater than or equal to 1, the said method of sending comprising:

- a step (E10) of spatial frequency multiplexing of a block of N data symbols $D_1$, $D_2$, ... , $D_N$ resulting in a block of N useful spatial symbols $S''_{u,1}$, $S_{u,2}$, ... , $S_{u,N}$, this step using an inverse discrete Fourier transform (IDFT);
- a step (E20) of adding C spatial redundancy symbols to the block of N useful spatial symbols, resulting in a block of N+C spatial symbols $S_1$, $S_2$, ... , $S_{N+C}$; and
- a step (E30) of precoding the block of N+C spatial symbols $S_1$, $S_2$, ... , $S_{N+C}$ with the aid of a focusing matrix of dimensions Mx(N+C), the said precoding step providing M precoded spatial symbols $X_1$, $X_2$,..., $X_M$, each precoded spatial symbol being sent on a distinct send antenna of the sender device.

2. Method of sending according to Claim 1, in which C=KT+LT, LT and KT being positive or zero integer parameters, the step (E20) of adding C spatial redundancy symbols comprising:

- the insertion of a suffix of LT symbols at the back of the block $S_{u,1}$, $S_{u,2}$, ..., $S_{u,N}$ of N spatial-frequency multiplexed data symbols; and/or
- the insertion of a prefix of KT symbols at the front of the block $S_{u,1}$, $S_{u,2}$,..., $S_{u,N}$ of N spatial-frequency multiplexed data symbols.

3. Method of sending according to Claim 2, in which:

- KT=C and LT=0; or
- KT=0 and LT=C.

4. Method of sending according to Claim 1, in which the focusing matrix is a time reversal matrix obtained on the basis of an estimation of a matrix of propagation channel (4) between the M send antennas of the sender device and the N+C receive antennas of the receiver device.

5. Computer program comprising instructions for the execution of the steps of the method of sending according to Claim 1 when the said program is executed by a computer.

6. Method of receiving, by a receiver device (3) comprising a number N+C of receive antennas, of N+C spatial symbols $Y_1$, $Y_2$, ..., $Y_{N+C}$, the said spatial symbols received resulting from the propagation via a propagation channel (4) of M precoded spatial symbols $X_1$, $X_2$, ..., $X_M$ sent by a sender device (2) via a number M of send antennas, the said precoded spatial symbols $X_1$, $X_2$, ... , $X_M$ arising from a precoding, with the aid of a focusing matrix, of a block of N+C spatial symbols $S_1$, $S_2$, ..., $S_{N+C}$, these spatial symbols $S_1$, $S_2$,..., $S_{N+C}$ arising from a spatial frequency multiplexing of data symbols $D_1, D_2,..., D_N$ using an inverse discrete Fourier transform, and from an addition of C spatial redundancy symbols, M, N and C being integer parameters greater than or equal to 1, the said method of receiving comprising:

- a step (E40) of extracting N useful spatial symbols received $S'_{u,1}$, $S'_{u,2}$, ..., $S'_{u,N}$ from among the said N+C spatial symbols received $Y_1$, $Y_2$, ..., $Y_{N+C}$;
- a step (E50) of spatial frequency demultiplexing of the N useful spatial symbols received $S'_{u,1}$, $S'_{u,2}$, ..., $S'_{u,N}$ using a discrete Fourier transform, resulting in a block of N demultiplexed data symbols $D'_1$, $D'_2,..., D'_N$; and
- a step of equalizing the block of N demultiplexed data symbols $D'_1$, $D'_2,..., D'_N$.

7. Method of receiving according to Claim 6, in which C=KR+LR, KR and LR being positive or zero integer parameters, and in which the N useful spatial symbols received $S'_{u,1}$, $S'_{u,2}$, ..., $S'_{u,N}$ extracted in the extraction step satisfy:

$$S'_{u,n} = Y_{n+KR}$$

for *n = 1,...,N.*

8. Method of receiving according to Claim 7, in which the parameters C, KR and LR satisfy, for at least one so-called target receive antenna, indexed by *n* and selected from among the N+C receive antennas of the receiver device (3), a condition of focusing of the spatial symbol $S_n$ on a space defined by the target receive antenna indexed by n and KR+LR receive antennas distributed around the target receive antenna indexed by n.

9. Method of receiving according to Claim 8, in which the parameters C, KR and LR satisfy that a probability P that:

$$\left\{ \left| \frac{H^{eq}_{n,n+\ell}}{H^{eq}_{n,n}} \right| \leq \varepsilon_{foc}, \right.$$

for $\ell$ integer such that $\ell > LR$ or
f ←KR, $1 \leq \ell + n$, and $0 \leq \varepsilon_{foc} < 1$ }

is less than a determined value *Pmin,* lying between 0 and 1, where $H^{eq}$ denotes a matrix of dimensions (N+C)x(N+C) resulting from the product of the focusing matrix and of a matrix representing the propagation channel between the M send antennas of the sender device and the N+C receive antennas of the receiver device, $H^{eq}_{j,p}$ denoting the

component situated at the intersection of the j-th row and of the p-th column of the matrix $H^{eq}$.

10. Method of receiving according to Claim 8, in which the parameters C, KR and LR satisfy that a probability P' that:

$$\left\{ \left| \frac{Z_{n,n+\ell}}{P_{noise}} \right| \leq \varepsilon_{foc}, \right.$$

for $\ell$ integer such that $\ell > $ LR or

$\ell <$ -KR, $1 \leq \ell + $ n, and $0 \leq \varepsilon_{foc} < 1$ }

is less than a determined value $P'min,$ lying between 0 and 1, where:

- $P_{noise}$ denotes a noise power at the level of the target receive antenna indexed by $n;$
- $Z_{n,n+\ell}$ denotes the power received at the level of the target receive antenna indexed by n associated with the spatial symbol $S_{n+\ell}$.

11. Method of receiving according to Claim 7, in which the parameters C, KR and LR satisfy that there exists a focal spot shape represented by a vector of dimension C+1 v = ($V_{-LR}$, $V_{-LR+1}$, ..., $V_{KR}$) of complex numbers such that, for any considered receive antenna, indexed by $n$, of the receiver device, the shape of a focal spot centred on this receive antenna and represented by a vector of dimension C+1 $A_n$ = ($A_{n,-LR}$, $A_{n,-LR+1}$, ... , $A_{n,KR}$) of complex numbers with $A_{n,n+\ell} = H^{eq}_{n,n+\ell}$ for

$$-\mathrm{LR} \leq \ell \leq \mathrm{KR}, 1 \leq n + \ell \, ,$$

satisfies:

$$d(A_n, v) \leq d_{max}$$

where:

- $d_{max}$ is a predetermined value,
- $d (A_n, \upsilon)$ denotes a distance between the shapes of focal spot $A_n$ and $\upsilon$; and
- $H^{eq}$ denotes a matrix of dimensions (N+C)x(N+C) resulting from the product of the precoding matrix and of a matrix representing the propagation channel between the M send antennas of the sender device and the N+C receive antennas of the receiver device, $H^{eq}_{j,p}$ denoting the component situated at the intersection of the j-th row and of the p-th column of the matrix $H^{eq}$.

12. Computer program comprising instructions for the execution of the steps of the method of receiving according to Claim 6 when the said program is executed by a computer.

13. Sender device (2) comprising a number M of send antennas, which is able to send signals formed of data symbols destined for a receiver device (3) comprising a number N+C of receive antennas, M, N and C being integer parameters greater than or equal to 1, the said sender device comprising:

- means for spatial frequency multiplexing of a block of N data symbols $D_1$, $D_2$, ... , $D_N$, the said means using an inverse discrete Fourier transform and providing a block of N useful spatial symbols $S_{u,1}$, $S_{u,2}$, ..., $S_{u,N}$;
- means for adding C spatial redundancy symbols to the block of N useful spatial symbols, providing a block of N+C spatial symbols $S_1$, $S_2$, ..., $S_{N+C}$;
- means for precoding the block of N+C useful spatial symbols $S_1$, $S_2$,..., $S_{N+C}$ provided by the insertion means, with the aid of a focusing matrix of dimensions Mx(N+C), providing M precoded spatial symbols $X_1$, $X_2$, ..., $X_M$; and
- means for sending each precoded spatial symbol on a distinct send antenna of the sender device.

14. Receiver device (3) comprising a number N+C of receive antennas, which is able to receive, on the said N+C receive antennas, N+C spatial symbols $Y_1$, $Y_2$, ..., $Y_{N+C}$, the said spatial symbols received resulting from the propagation via a propagation channel (4) of M precoded spatial symbols $X_1$, $X_2$, ..., $X_M$ sent by a sender device (2) via a number M of send antennas, the said precoded spatial symbols $X_1$, $X_2$, ..., $X_M$ arising from a precoding, with the aid of a focusing matrix, of a block of N+C spatial symbols $S_1$, $S_2$, ... , $S_{N+C}$, these spatial symbols $S_1$, $S_2$, ..., $S_{N+C}$ arising from a spatial frequency multiplexing of data symbols $D_1$, $D_2$, ..., $D_N$ using an inverse discrete Fourier transform, and from an addition of spatial redundancy symbols, M, N and C being integer parameters greater than or equal to 1, the said receiver device comprising:

- means for extracting N useful spatial symbols received labelled $S'_{u,1}$, $S'_{u,2}$, ..., $S'_{u,N}$ from among the said N+C spatial symbols received $Y_1$, $Y_2$, - - -, $Y_N$+c;
- means for spatial frequency demultiplexing of the N useful spatial symbols received $S'_{u,1}$, $S'_{u,2}$, ..., $S'_{u,N}$, using a discrete Fourier transform and providing a block of N demultiplexed data symbols $D'_1$, $D'_2$,..., $D'_N$; and
- means for equalizing the block of N demultiplexed data symbols $D'_1$, $D'_2$, ... , $D'_N$.

15. Receiver device according to Claim 14, in which the N+C receive antennas form an array of antennas having a geometry such that if $\Gamma_k$ denotes the set of the cartesian coordinates of (C+1) receive antennas labelled $RX_k$, $RX_{k+1}$, ..., $RX_{k+C}$, there exists a translation and/or a rotation making it possible to pass from $\Gamma_1$ to $\Gamma_k$ for any k lying between 1 and N.

16. Receiver device according to Claim 15, in which the N+C receive antennas form a circular array or a linear array and are regularly spaced.

17. Multi-antenna transmission system comprising:

- a sender device in accordance with Claim 13; and
- a sender device in accordance with Claim 14.

FIG.1

FIG.2A

FIG.2B

FIG.4

FIG.3A

FIG.3B

FIG.5

FIG.6

**EP 2 795 859 B1**

## RÉFÉRENCES CITÉES DANS LA DESCRIPTION

**Documents brevets cités dans la description**

- WO 2009048256 A